(19)

Europäisches Patentamt

European Patent Office

Office européen des brevets

(11) **EP 4 201 968 B1**

(12) **EUROPEAN PATENT SPECIFICATION**

(45) Date of publication and mention
of the grant of the patent:
**08.07.2026 Bulletin 2026/28**

(21) Application number: **21217799.2**

(22) Date of filing: **27.12.2021**

(51) International Patent Classification (IPC):
**C08F 10/02** *(2006.01)*    **C08L 23/08** *(2025.01)*

(52) Cooperative Patent Classification (CPC):
(C-Sets available)
**C08F 10/02; C08L 23/0815;** C08L 2203/18;
C08L 2205/025; C08L 2207/068        (Cont.)

(54) **HIGH PERFORMANCE MULTIMODAL ULTRA HIGH MOLECULAR WEIGHT POLYETHYLENE**

MULTIMODALES HOCHLEISTUNGSPOLYETHYLEN MIT ULTRAHOHEM MOLEKULARGEWICHT

POLYÉTHYLÈNE MULTIMODAL HAUTES PERFORMANCES À POIDS MOLÉCULAIRE ULTRA ÉLEVÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**28.06.2023 Bulletin 2023/26**

(73) Proprietor: **Thai Polyethylene Co., Ltd.
10800 Bangkok (TH)**

(72) Inventors:
 • **Ekabutr, Pongpol
  10800 Bangkok (TH)**
 • **Suchao-In, Natthaporn
  10800 Bangkok (TH)**
 • **Jarumaneeroj, Chatchai
  10800 Bangkok (TH)**

 • **Nantasetphong, Wiroj
  10800 Bangkok (TH)**

(74) Representative: **Erbacher, Martin
  Boehmert & Boehmert
  Anwaltspartnerschaft mbB
  Pettenkoferstrasse 22
  80336 München (DE)**

(56) References cited:
  **US-A1- 2019 256 695    US-A1- 2020 095 404**

Remarks:
The file contains technical information submitted after the application was filed and not included in this specification

(52) Cooperative Patent Classification (CPC): (Cont.)

C-Sets
**C08F 10/02, C08F 2/001;**
**C08F 10/02, C08F 4/6565;**
**C08L 23/0815, C08L 23/06, C08L 23/0815;**
**C08L 23/0815, C08L 23/0815, C08L 23/06;**
C08F 110/02, C08F 2500/01, C08F 2500/04,
C08F 2500/07, C08F 2500/17, C08F 2500/31;
C08F 110/02, C08F 2500/01, C08F 2500/04,
C08F 2500/17, C08F 2500/31;

C08F 110/02, C08F 2500/02, C08F 2500/17;
C08F 210/16, C08F 210/08, C08F 2500/01,
C08F 2500/04, C08F 2500/17, C08F 2500/31;
C08F 210/16, C08F 210/08, C08F 2500/02,
C08F 2500/17;
C08F 210/16, C08F 210/14, C08F 2500/01,
C08F 2500/04, C08F 2500/07, C08F 2500/17,
C08F 2500/27, C08F 2500/31;
C08F 210/16, C08F 210/14, C08F 2500/02,
C08F 2500/17

**Description**

The demand of polyethylene resins is increasing because polyethylene resins are used in a variety of applications. There is a need of high performance of polyethylene for new plastic applications. To balance processability and physical properties of ethylene copolymers, multimodal ultra high molecular weight polyethylene is a promising material.

Ultra high molecular weight polyethylene (UHMWPE) is polyethylene with an average molecular weight in the millions, usually between 3.5 and 7.5 million g/mol. The high molecular weight brings the excellent mechanical properties in terms of abrasion resistance, impact resistance, fatigue resistance, and chemical resistance as compared to common engineering plastics. However, due to high molecular weight, it results in less efficient packing of the chains into the crystal structure as observed by densities which are less than high-density polyethylene (for example, 0.930-0.935 $g/cm^3$). In addition, the major drawback of UHMWPE is processing. UHMWPE does not flow even above its melting temperature resulting in a difficulty to process by conventional extrusion, except ram extrusion.

The ultra high molecular weight polyethylene (UHMWPE) are well known for plastic sheet fabrication in various applications due to excellent mechanical properties such as high abrasion resistance and impact strength. Normally, UHMWPE is not easy to process via convention extrusion The specific machines and fabrication, for example, compression molding and ram extrusion are generally required.

Several reports have claimed that UHMWPE can improve the toughness and mechanical properties of polymers (abrasion, impact, tensile, low friction and others) by blending with other polymers such as polypropylene, polycarbonate, and conventional polyethylene. It is also well-known that UHMWPE forms separate islands in HDPE matrix and therefore leads to inhomogeneity in the final blend. When harsh compounding conditions or re-extrusions are applied to improve homogeneity, the degradation of the polymer chain occurs resulting in the reduction of ultrahigh molecular weight portion.

The research to improve processability of UHMWPE was done by Jaggi and coworkers. They use the blending system between HDPE and UHMWPE and applying the complex viscosity to observe the processability of their system. It was showed that the complex viscosity of UHMWPE was reduced when the amount of HDPE increased. Moreover, the mechanical properties of blend system was improved in terms of tensile strength, Young's modulus, and impact strength. (J polym Res 2014, 21, 482). The reduce of complex viscosity can be done by blending with another system, for example, UHMWPE with LDPE or LLDPE which shown in the report of Chen and coworkers. (polymer science series A vol 56 no 5 2014)

However, there are more another system to improve the processability and balancing mechanical properties of UHMWPE. It was known, blending system of UHMWPE with other low molecular weight polymer, for example, PP to improve processability. They claimed that the amount of UHMWPE in HDPE/PP affects on mechanical properties and processability. The optimum condition of blending ratio between UHMWPE and HDPE/PP must be verify due to maximize mechanical properties. However, the mixing behavior between UHMWPE and HDPE/PP is very significant to mechanical properties even processability is the key to control from blending system which is very difficult to control

EP 1655 334 A1 discloses the multimodal production of an ethylene polymer which is produced in a multistage process with a MgCl2-based Ziegler-Natta catalyst The polymerization stages are performed in the following order to achieve firstly an ultra high molecular weight polymer, followed by achieving a low molecular weight polymer, and finally achieving high molecular weight polymer in the last step. The polymerization catalyst is charged to a prepolymerization step to make an ultra high molecular weight fraction.

WO 2013/144328 describes a composition of multimodal high density polyethylene which is produced using a Ziegler-Natta catalyst for use in molding applications. A small fraction of ultra-high polyethylene of less than 15 % by weight is produced in a third reactor.

In WO2014/091501 A1, The blending of HDPE and UHMWPE can be improved the impact strength or tensile strain in HDPE. However, the morphology after blending is one of a key factor.

Blending of bimodal HDPE and UHMWPE were successfully done in WO 2015121161 A1 and EP2907843 A1. They claimed that the mechanical properties of bimodal HDPE were increased due to the fraction of UHMWPE. Moreover, the mixing can be prepared by extruder.

In EP2743305 A1, the blending between multimodal HDPE and UHMWPE was done. UHMWPE was added in multimodal HDPE pipe resin for improving the mechanical properties including sagging properties however multiple extrusion was required to improve homogeneity of the blend.

US 2009/0163679 A1 describes a process for producing multimodal ultrahigh molecular weight polyethylene. The polymerization is carried out by CSTR (continuous stirred tank reactor), wherein the molecular weight of each reactor was controlled by pressure, temperature, and hydrogen, and ultra high molecular weight ethylene polymer composition can be obtained by this process.

US 2020/095404 A1 discloses a multimodal polyethylene composition comprising; (A) 30 to 65 parts by weight, preferably 30 to 50 parts by weight, most preferred 30 to 40 parts by weight of the low molecular weight polyethylene having a weight average molecular weight (Mw) of 20,000 to 90,000 g/mol or medium molecular weight polyethylene having a weight average molecular weight (Mw) of more than 90,000 to 150,000 g/mol; (B) 5 to 40 parts by weight, preferably 10 to 35 parts by weight, most preferred 15 to 35 parts by weight, of the first high molecular weight polyethylene having a weight average molecular weight (Mw) of more than 150,000 to 1,000,000 g/mol or the first ultra high molecular weight polyethylene having a weight average molecular weight (Mw) of more than 1,000,000 to 5,000,000 g/mol; and (C) 10 to 60 parts by weight, preferably 15 to 60 parts by weight, most preferred 20 to 60 parts by weight of the second high molecular weight polyethylene having a weight average molecular weight (Mw) of more than 150,000 to 1,000,000 g/mol or the second ultra high molecular weight polyethylene having a weight average molecular weight (Mw) of more than 1,000,000 to 5,000,000 g/mol, wherein a $MI_{21}$ of the multimodal polyethylene composition is less than 2.0 g/10 min, and a Charpy impact strength at 23° C. the of multimodal polyethylene composition is at least 70 kJ/m$^2$, preferably 70 to 120 kJ/m$^2$, measured by ISO 179, a sheet comprising the multimodal polyethylene composition as well as the use of the sheet.

US 2019/256695 A1 discloses a polymer composition comprising a base resin, the base resin including a first high molecular weight component, a low molecular weight component and a second high molecular weight component. The weight average molecular weight of the second high molecular weight component differs from the first high molecular weight component. The ratio of the weight and number average molecular weight of the **first** high molecular weight component is greater than 5. The first high molecular weight component has a density of equal or less than 930 kg/m$^3$, and an intrinsic viscosity of equal or less than 15 dl/g, The base resin has a melt flow rate $MFR_5$ of equal or less than 0.40 g/10 min and the composition has a viscosity at a shear stress of 747 Pa (eta747) of more than 700 kPas.

However, also in light of the above prior art, there is still a need to provide multimodal polyethylene compositions for preparing UHMWPE and sheets overcoming drawbacks of the prior art, in particular to provide high density polyethylene compositions for producing sheets having improved properties such as abrasion resistance and/or having improved homogeneity and/or processability.

It is an object of the present invention to provide a multimodal polyethylene composition overcoming drawbacks of the prior art, in particular having improved mechanical properties.

This object is achieved by a multimodal polyethylene composition comprising;

(A) 7 to 40 % by weight, with respect to the total weight of the multimodal polyethylene composition, of a low molecular weight polyethylene homopolymer having a viscometer molecular weight (Mv), of 31,000 to 260,000 g/mol;

(B) 20 to 45 % by weight, with respect to the total weight of the multimodal polyethylene composition, of a first high molecular weight polyethylene homopolymer or copolymer having a viscometer molecular weight of from 1,900,000 to 5,200,000 g/mol; and

(C) 28 to 72 % by weight, with respect to the total weight of the multimodal polyethylene composition, of a second high molecular weight polyethylene homopolymer or copolymer having a viscometer molecular weight from 3,000,000 to 7,300,000 g/mol;

wherein the first high molecular weight polyethylene and the second high molecular weight polyethylene differ from each other with respect to the viscometer molecular weight thereof;

an intrinsic viscosity (IV) of the multimodal polyethylene composition is from 11 to 19.5 dl/g, wherein the intrinsic viscosity is measured according to ISO 1872.

The "viscometer molecular weight" as referred to herein with respect to one of the constituents (A) to (C), that is, with respect to one of the polyethylene fractions comprised in the inventive multimodal polyethylene composition refers to the individual viscometer molecular weight of the respective fraction. In other words, the individual viscometer molecular weight is not impacted by other polyethylene fractions of the multimodal polyethylene composition, such fractions which may be prepared before in a method for preparing the multimodal polyethylene composition.

The multimodal polyethylene composition of the invention is produced in a multistage process wherein fractions (A), (B) and (C) are produced in subsequent stages. In such a case, the properties of the fractions produced in the second step or the third step (or further steps) of the multistage process can either be inferred from polymers which are separately produced in a single stage by applying identical polymerisation conditions (e.g. identical temperature, partial pressures of the reactants/diluents, suspension medium, reaction time) with regard to the stage of the multistage process in which the fraction is produced, and by using a catalyst on which no previously produced polymer is present. Alternatively, the properties of the fractions produced in a higher stage of the multistage process may also be calculated, e. g. in accordance with B. Hagstrom, Conference on Polymer Processing (The Polymer Processing Society), Extended Abstracts and Final Programme, Gothenburg, August 19 to 21, 1997, 4: 13.

Thus, although not directly measurable on the multistage process products, the properties of the fractions produced in higher stages of such a multistage process can be determined by applying either or both of the above methods. The skilled person will be able to select the appropriate method. One particular way of calculating the properties, such as the molecular weight (such as Mv) is applying a deconvolution process using Excel or other calculation programs. In the deconvolution process subtraction of the respective signals is carried out

Polymer HDPEs produced in a multistage process are also designated as "in- situ" blends. The resulting end product consists of an intimate mixture of the polymers from the three or more reactors, the different molecular-weight-distribution curves of these polymers together forming a molecular-weight-distribution curve having a broad maximum or two or three or more maxima The low molecular weight polyethylene homopolymer having a viscometer molecular weight (Mv) of 31,000 to 260,000 g/mol may be referred to herein as the constituent (A). The first high molecular weight polyethylene homopolymer or copolymer having a viscometer molecular weight (Mv) of a viscometer molecular weight of from 1,900,000 to 5,200,000 g/mol may be referred to herein as the constituent (B). The second high molecular weight polyethylene homopolymer or copolymer having a viscometer molecular weight (Mv) of a viscometer molecular weight of from 3,000,000 to 7,300,000 g/mol may be referred to herein as the constituent (C). The three constituents (A), (B) and (C) may also be referred to as fractions of the multimodal polyethylene composition. The multimodal polyethylene composition may comprise the three polyethylene factions (A), /B), and (C) in a total amount selected from the group consisting of at least 50 %-wt, at least 60 %-wt, at least 70 %-wt, at least 80 %-wt, at least 90 %-wt, at least 95 %-wt, at least 98 %-wt, at least 99 %-wt with with respect to the total weight of the multimodal polyethylene composition, respectively. The multimodal polyethylene composition may substantially consist of the three polyethylene factions (A), /B), and (C). The multimodal polyethylene composition may consist of the three polyethylene factions (A), /B), and (C).

The multimodal polyethylene composition may comprise the constituent (A) in an amount from 7 to 40 % by weight, with respect to the total weight of the multimodal polyethylene composition.

The multimodal polyethylene composition may comprise the constituent (B) in an amount from 20 to 45 % by weight, with respect to the total weight of the multimodal polyethylene composition.

The multimodal polyethylene composition may comprise the constituent (B) in an amount from 28 to 72 % by weight, with respect to the total weight of the multimodal polyethylene composition.

The constituent (A) may have a viscometer molecular weight (Mv) of 31,000 to 260,000, preferably from 31,500 to 236,000 g/mol.

The constituent (B) may have a viscometer molecular weight (Mv) of 1,900,000 to 2,600,000, preferably from 2,100,000 to 4,700,000 g/mol.

The constituent (C) may have a viscometer molecular weight (Mv) of 3,000,000 to 7,300,000, preferably from 3,400,000 to 6,700,000 g/mol.

In case that the first high molecular weight polyethylene, constituent (B), is a copolymer, the comonomer copolymerized together with the polyethylene may be a $C_4$ monomer (butene) and/or $C_6$ monomer (hexene). The amount of comonomer in the copolymer may be from 0.01 to 1.0 % by mol.

In case that the second high molecular weight polyethylene, constituent (C), is a copolymer, the comonomer copolymerized together with the polyethylene may be a $C_4$ monomer (butene) and/or $C_6$ monomer (hexene). The amount of comonomer in the copolymer may be from 0.01 to 1.0 % by mol.

The total amount of comonomer in the multimodal polyethylene composition may be from 0.01 to 2.0 % mol, preferably 0.01 to 1.5 % mol, more preferably 0.01 to 1.0 % mol, even more preferably 0.01 to 0.5, and most preferably 0.01 to 0.2 % mol based on the total weight of the multimodal polyethylene composition.

The multimodal polyethylene composition may have a weight average molecular weight ($M_w$) from 1,200,000 g/mol to 2,500,000 g/mol, especially from 1,300,000 g/mol to 2,300,000 g/mol, determined by GPC.

The multimodal polyethylene composition may have a number average molecular weight ($M_n$) from 20,000 g/mol to 130,000 g/mol determined by GPC.

The multimodal polyethylene composition may have a molecular weight distribution ($M_w/M_n$), PDI, from 10 to 80, especially from 17 to 70.

The intrinsic viscosity (IV) of the multimodal polyethylene composition may be from 11.1 to 19.3, wherein the intrinsic viscosity is measured according to ISO 1872.

The multimodal polyethylene composition may have a double notched Charpy impact strength of 170 to 300 kJ/m$^2$, measured by ISO11542-2. The multimodal polyethylene composition may have a double notched Charpy impact strength from 185 to 278, especially from 188.0 to 278.0 kJ/m$^2$, measured by ISO11542-2.

The viscometer molecular weight (Mv) of the multimodal polyethylene composition, that is the composition comprising all constituents (A), (B) and (C) may be from 1,800,000 g/mol to 4,600,000 g/mol, especially from 1,900,000 g/mol to 4,500,000 g/mol, such as from 1,930,000 g/mol to 4,420,000 g/mol.

The viscometer molecular weight (Mv) of a composition comprising only the constituents (A) and (B), that is, a composition received after a second reactor when preparing the multimodal polyethylene composition in a cascade multi-reactor process, may be from 1,000,000 g/mol to 2,700,000 g/mol, especially from 1,050,000 g/mol to 2,690,000 g/mol.

The multimodal polyethylene composition may have a complex viscosity Eta(0.1) at high shear rate (0.1 1/s, at 190°C), from 2,550 to 5,800 kPa.s, especially from 2,600 to 5,780 kPa.s.

The multimodal polyethylene composition may have a density from 0.930 to 0.960 g/cm$^3$, especially from 0.9320 to 0.9520 g/cm$^3$ according to ASTM D 1505.

The object is further achieved by a sheet comprising the multimodal polyethylene composition according to the invention.

The object is further achieved by a hollow article comprising the multimodal polyethylene composition according to the invention.

The object is further achieved by a method for preparing the sheet according to the invention or the hollow article according to the invention, comprising a step of compression molding the multimodal polyethylene composition according to the invention. The compression molding process is a method of material preheated by hot plates or molds. Pressure and heat are applied to the materials with proper time until the material has completely fused within the mold. The finished products can be a sheet or specific shapes depending on the mold design.

The object is further achieved by a method for preparing the sheet according to the invention or the hollow article according to the invention, comprising a step of extruding the multimodal polyethylene composition according to the invention.

The object is further achieved by a sheet or hollow article comprising the multimodal polyethylene composition according to the present invention.

Finally, the object is achieved by the use of the sheet or of the hollow article as a compressed sheet, liner, profiles, profile extrusion, machinery, fiber, tape, industrial parts, high impact parts, high abrasive parts, sliding materials, RAM extrusion profiles.

The inventive multimodal polyethylene may be prepared by a process for producing a multimodal polyethylene composition in Table 1. The comparative and inventive examples were produced by using either the small-scale reactor or the large scale reactor as described in the following in detail.

*Small-scale reactor*

The polymerization was carried out in a 10 liters autoclave reactor using 6 liters purified n-hexane as a diluent. The Ziegler-Natta catalyst was described in the Hungarian patent application number 0800771R, for example in example 1 thereof. The used amount of catalyst as shown in Table 1 was added. The triethylaluminum were introduced. Thereafter, the temperature was heated to desired value and ethylene feeding was started. Hydrogen was dosed to reactor for adjusting intrinsic viscosity of produced polymer in first reactor. Ethylene was fed continuously with keeping a total pressure of reaction. When desired amount of powder is made, the polymerization was stopped by releasing pressure and cooling down the slurry content. The second stage of the reaction was started by raising the temperature to desired value. Ethylene was fed continuously with keeping a total pressure of reaction. The polymerization was stopped when a blending ratio of second stage had been reached. The polymerization was stopped by releasing pressure and cooling down the slurry content. The third stage of the reaction was started by raising the temperature to desired value. Optionally, C4 to C12 α-olefin comonomer was added in this step for producing copolymer in third stage. Ethylene was fed continuously with keeping a total pressure of reaction. The polymerization was stopped when a blending ratio of second stage had been reached. Polymerization was stopped by releasing pressure and cooling down the slurry content. The blending ratio can be calculated directly by comparing the amount of ethylene uptake during the different stages of polymerization.

*Large-scale reactor*

The polymerization was carried out in a continuous process using three reactors connected in series. The Ziegler Natta Catalyst was described in the Hungarian patent application number 0800771R, for example in example 1 thereof. The used amount of catalyst as shown in Table 1 was introduced into the first reactor together with sufficient amount of hexane and triethylaluminum as co-catalyst. Amount of ethylene and hydrogen was set so that the polymer composition and intrinsic viscosity of the first reactor achieved the desired value.

The polymer slurry from the first reactor was depressurized before being transferred to the second reactor in which the unreacted gas has been removed. The polymerization in the second reactor is continued by feeding the ethylene that was set so that the polymer composition achieved the desired value. Optionally, C4 to C12 α-olefin comonomer was also fed in the second reactor for producing copolymer.

The polymer slurry from the second reactor was then transferred to the third reactor. The polymerization in the third reactor is continued by feeding the ethylene that was set so that the polymer composition achieved the desired value. Optionally, C4 to C12 α-olefincomonomer was also fed in the third reactor for producing copolymer. Optionally, hydrogen was fed to control intrinsic viscosity of the third reactor to the desired value.

The powder leaving the third reactor was separated from the solvent and dried.

**Definition and Measurement Methods**

MI$_2$. Melt flow index (MI) of polymer was measured according to ASTM D 1238 and indicated in g/10 min that determines the flowability of polymer under testing condition at 190°C with load 2.16 kg (MI2).

Density: Density of polyethylene was measured by observing the level to which a pellet sinks in a liquid column gradient tube, in comparison with standards of known density. This method is determination of the solid plastic after annealing at 120°C follow ASTM D 1505 and showed in g/cm$^3$ unit.

Molecular weight and Polydispersity index (PDI): The weight average molecular weight (Mw), the number average molecular weight (Mn) and the Z average molecular weight (M$_Z$) in g/mol in g/mol were analysed by gel permeation chromatography (GPC). Polydispersity index was calculated by Mw/Mn. Around 8 mg of sample was dissolved in 8 ml of 1,2,4-trichlorobenzene at 160°C for 90 min. Then the sample solution, 200 μl, was injected into the high temperature GPC with IR5, an infared detector (Polymer Char, Spain) with flow rate of 0.5 ml/min at 145°C in column zone and 160°C in detector zone. The data was processed by GPC One® software, Polymer Char, Spain.

Intrinsic Viscosity (IV): The test method covers the determination of the dilute solution viscosity of polyethylene at 135 °C or an ultra high molecular weight polyethylene (UHMWPE) at 150°C. The polymeric solution was prepared by dissolving polymer in Decalin with 0.2% wt/vol stabilizer (Irganox 1010 or equivalent). The details are given for the determination of IV according to ISO 1628. Viscometer molecular weight

The viscometer molecular weight (MV) can be calculated based on the IV determined as described above as shown in equation below:

$$Mv = 5.37 \times 10^4 \times (IV)^{1.49}$$

where Mv is the viscometer molecular weight and the unit of Mv is (g/mol), IV is intrinsic viscosity (dl/g).

Individual molecular weight calculation and individual intrinsic viscosity

The multimodal polyethylene composition of the invention is produced in a multistage process wherein fractions (A), (B) and (C) are produced in subsequent stages. In such a case, the properties of the fractions produced in the second step or the third step (or further steps) of the multistage process can either be inferred from polymers which are separately produced in a single stage by applying identical polymerisation conditions (e.g. identical temperature, partial pressures of the reactants/diluents, suspension medium, reaction time) with regard to the stage of the multistage process in which the fraction is produced, and by using a catalyst on which no previously produced polymer is present. Alternatively, the properties of the fractions produced in a higher stage of the multistage process may also be calculated, e. g. in accordance with B. Hagstrom, Conference on Polymer Processing (The Polymer Processing Society), Extended Abstracts and Final Programme, Gothenburg, August 19 to 21, 1997, 4: 13.

Thus, although not directly measurable on the multistage process products, the properties of the fractions produced in higher stages of such a multistage process can be determined by applying either or both of the above methods. The skilled person will be able to select the appropriate method. One particular way of calculating the properties, such as the molecular weight (such as Mv) is applying a deconvolution process using Excel or other calculation programs. In the deconvolution process subtraction of the respective signals is carried out.

Polymer HDPEs produced in a multistage process are also designated as "in-situ" blends. The resulting end product consists of an intimate mixture of the polymers from the three or more reactors, the different molecular-weight-distribution curves of these polymers together forming a molecular-weight-distribution curve having a broad maximum or two or three or more maxima.

The calculation of individual IV and individual Mv of each example in reactor 1,2 and 3 show in Table 1.

Comonomer content: The comonomer content was determined by high resolution $^{13}$C-NMR. 13C-NMR spectra were recorded by 500 MHz ASCENDTM, Bruker, with cryogenic 10 mm probe. TCB was used as major solvent with TCE-d2 as locking agent in the ratio of 4:1 by volume. The NMR experiments were carried on at 120°C, and the inverse gate 13C (zgig) of pulse program with 90° for pulse angle were used. The delay time (D1) was set to 10 seconds for full-spin recovery. Finally, the comonomer content is calculated in %mol unit.

Viscosity at shear rate 0.1 (1/s) (Eta(0.1))

Rheological parameter are determined by using control strain rheometer model ARES-G2 TA instrument. The geometry is Plate-Plate 8mm diameter. The measurement gap was defined at 1mm. The dynamic oscillation shear performed at angular frequency during 0.1 to 200 rad/s at temperature 190°C under nitrogen atmosphere. the sample preparation was prepared by compression molding molding at 190°C. Viscosity at 0.1 1/s [η0.1] was obtained by cox-merz transformation of complex viscosity at a specific angular frequency equal to 0.1 rad/s. The viscosity at shear rate 0.1 (1/s) showed in the unit kPa.s.

Double-notched Charpy impact strength: The compressed specimen according to ISO 11542-2 was prepared. Charpy impact strength (respectively the double notched Charpy impact strength) is determined according to ISO 11542-2 at 23°C and showed in the unit kJ/m$^2$.

**Experimental and examples**

**Examples**

To prepare an inventive sheet from the above compositions, it was found that a sub-range of multimodal polyethylene compositions which might be obtained using the inventive reactor system by polymerization in small-scale reactor and large-scale reactors, are particularly preferred. In detail, the compositions suitable to form the inventive sheet are as follows and have the following properties. The following comparative examples refer to the sheet related compositions.

The inventive and comparative examples were prepared following to the process conditions explained in Table 1. Most of UHMWPE samples were prepared in the way to provide improved melt processing and impact properties comparable to general polyethylene. Then the compositions were prepared into the sheet and their properties were defined in Table 1.

Inventive Example 1 (E1)

The inventive example 1 (E1) was produced to make the multimodal polyethylene composition with the small-scale reactor using the protocol disclosed above and the amounts of reactants as shown in Table 1. A homopolymer was produced in the first reactor to obtain a medium molecular weight portion before transferring such polymer. The low to medium molecular weight polymer was then transferred to the second reactor to produce a first ultra high molecular weight polymer. Finally, produced polymer from second reactor was transferred to the third reactor to create a second ultra high molecular weight polymer. The second and third reactors are operated under hydrogen depleted polyethylene polymerization. The UHMWPE powder with IV of 11.1 dl/g was obtained.

Inventive Example 2 (E2)

The inventive example 2 (E2) was carried out in the same manner as E1 with various kinds of IV by adjusting the composition of multimodal and polymerization condition with 1-hexene comonomer. The inventive example 2 (E2) with IV of 13.7 dl/g with comonomer content, 0.03 % mol shows the high impact strength as compared to comparative blend samples.

Inventive Example 3 (E3)

The inventive example 3 (E3) was produced in the same manner as E1 and E2 with different blending composition as shown in Table 1. The percentage of 1-butene comonomer incorporation of finished product is 0.17 %mol. The UHMWPE powder with IV of 15.8 dl/g was obtained.

Inventive Example 4 (E4)

The inventive example 4 (E4) was carried out in the same manner as E1, E2 and E3 but synthesis in large-scale reactor with different by adjusting the composition of multimodal and polymerization condition. The IV is higher than E1, E2 and E3 without comonomer content. The UHMWPE powder with IV of 16.4 dl/g was obtained.

Inventive Example 5 (E5)

The inventive example 5 (E5) was carried out in the same manner as E1, E2, E3, and E4 but the synthesis in small-scale reactor with different blending composition and IV of second and third reactors by polymerization condition with 1-butene comonomer. The UHMWPE powder with IV of 18.2 dl/g with comonomer content, 0.03% mol was obtained.

Inventive Example 6 (E6)

The inventive example 6 (E6) was carried out in the same manner as E1, E2, E3, E4, and E5 but the synthesis in large-scale reactor with different blending composition and IV of second and third reactors without comonomer content. The UHMWPE powder with IV of 19.3 dl/g was obtained. This inventive example is the highest IV with high Eta(0.1); 5,772 kPa.s that the processability is limited.

Inventive Example 7 (E7)

The inventive example 7 (E7) was carried out in the same manner as E1, E2, E3, E4, E5, and E6 that the synthesis is polymerization in small-scale reactor with different blending composition and IV of second and third reactors without comonomer content. The UHMWPE powder with IV of 11.6 dl/g was obtained.

Inventive Example 8 (E8)

The inventive example 8 (E8) was carried out in the same manner as E1, E2, E3, E4, E5, E6, and E7 that the synthesis is polymerization in small-scale reactor with different blending composition and IV of second and third reactors without comonomer content. The UHMWPE powder with IV of 12.3 dl/g was obtained.

Inventive Example 9 (E9)

The inventive example 9 (E9) was carried out in the same manner as E1, E2, E3, E4, E5, E6, E7, and E8 that the synthesis is polymerization in large-scale reactor with different blending composition and IV of second and third reactors without comonomer content. The UHMWPE powder with IV of 13.5 dl/g was obtained. This inventive example shows the highest impact property compared to all comparative and inventive examples

Comparative Example 1 (CE1)

A unimodal homopolymer was a commercial market grade (U521) which has the IV of 25.0 dl/g.

Comparative Example 2 (CE2)

The comparative example 2 (C2) was carried out in the same manner as E1 by using large-scale reactor with various IV by adjusting the composition of multimodal and polymerization condition with blending ratio 12/30/58. The comparative example 2 (CE2) with IV of 24.8 dl/g.

Comparative Example 3 (CE1)

The comparative example 3 (CE3) is multimodal polyethylene polymerized with blending ratio 49/25/26. The polymerization process was carried out in small-scale reactor. The MFR of first reactor is 20 g/10 min. The intrinsic viscosity of second and third reactors are 4.4 dl/g and 6.7 dl/g, respectively; polymerization with 1-butene comonomer; 0.2% mol.

Comparative Example 4 (CE4)

The comparative example 4 (CE4) is the blend of a homo-polyethylene with unimodal UHMWPE that synthesized by us with IV of 23 dl/g._A homo-polyethylene powder with $MI_2$ of 0.04 g/10 min and IV range of 2-3 dl/g was blended with UHMWPE powder and IV of 23 by single screw extruder with the composition of 10 parts by weight of homo-polyethylene and 90 parts by weight of UHMWPE. The temperature profiles of single screw extruder were set at 130 °C to 180 °C from the barrel to the die The blend was extruded and granulated into pellets with obtainable IV of 20.9 dl/g.

Comparative Example 5 (CE5)

The comparative example 5 (CE5) is multimodal polyethylene polymerized with blending ratio 45/35/20. The polymerization process was carried out in small-scale reactor. The UHMWPE powder with IV of 13.0 dl/g was obtained.

Comparative Example 6 (CE6)

The comparative example 6 (CE6) is multimodal polyethylene polymerized with blending ratio 15/30/55. The polymerization process was carried out in large-scale reactor. The UHMWPE powder with IV of 8.2 dl/g was obtained.

Comparative Example 7 (CE7)

The comparative example 7 (CE7) is multimodal polyethylene polymerized with blending ratio 5/20/75. The polymerization process was carried out in small-scale reactor. The UHMWPE powder with IV of 23.9 dl/g was obtained.

Table 1 Polymerization condition

| Example name | | CE1 | CE2 | CE3 | CE4 | CE5 | CE6 | CE7 | E1 | E2 | E3 | E4 | E5 | E6 | E7 | E8 | E9 |
|---|---|---|---|---|---|---|---|---|---|---|---|---|---|---|---|---|---|
| Operation Mode | | UNI | MULTI | MULTI | BLEND | MULTI | MULTI | MULTI | MULTI | MULTI | MULTI | MULTI | MULTI | MULTI | MULTI | MULTI | MULTI |
| Polymer composition | $W_A$(%) | 100 | 12 | 49 | - | 45 | 12 | 5 | 28 | 28 | 8 | 15 | 21 | 15 | 30 | 35 | 12 |
| | $W_B$(%) | - | 30 | 25 | - | 35 | 30 | 20 | 40 | 40 | 25 | 30 | 35 | 30 | 40 | 30 | 30 |
| | $W_{C(\%)}$ | - | 58 | 26 | - | 20 | 58 | 75 | 32 | 32 | 67 | 55 | 44 | 55 | 30 | 35 | 58 |
| Catalyst | Catalyst Feed (kg Cat / tonC2 total) | - | 0.16 | 0.07 | - | 0.24 | 0.08 | 0.09 | 0.31 | 0.31 | 0.31 | 0.16 | 0.31 | 0.19 | 0.14 | 0.28 | 0.15 |
| First Reactor | P total (bar) | - | 8.0 | 4.0 | - | 8.0 | 3.3 | 8.0 | 8.0 | 8.0 | 8.0 | 3.7 | 8.0 | 8.0 | 8.0 | 8.0 | 1.8 |
| | C2 feed (kg C2 / tonC2 total) | - | 1200 | 501.1 | - | 450.0 | 120.0 | 57.1 | 241.2 | 241.2 | 91.5 | 152.3 | 211.6 | 165.2 | 242.1 | 342.2 | 120.0 |
| | H2 feed (kgH2 / tonC2 Rx1) | - | 0.7 | 0.5 | - | 0.9 | 21.7 | 1.0 | 2.9 | 3.0 | 1.4 | 0.7 | 1.8 | 0.7 | 2.3 | 2.2 | 0.8 |
| | Temp (C) | - | 85 | 85 | - | 80 | 68 | 75 | 80 | 80 | 80 | 73 | 80 | 80 | 85 | 80 | 67 |
| | Individual IV (dl/g) | - | 4.9 | 1.1 | - | 3.0 | 1.4 | 3.4 | 0.7 | 0.8 | 1.2 | 1.2 | 1.8 | 2.7 | 1.1 | 1.0 | 2.2 |
| | Individual Mv x $10^6$(g/mol) | - | 0.57 | 0.06 | - | 0.28 | 0.09 | 0.33 | 0.03 | 0.04 | 0.07 | 0.07 | 0.13 | 0.24 | 0.06 | 0.05 | 0.17 |

| Example name | | CE1 | CE2 | CE3 | CE4 | CE5 | CE6 | CE7 | E1 | E2 | E3 | E4 | E5 | E6 | E7 | E8 | E9 |
|---|---|---|---|---|---|---|---|---|---|---|---|---|---|---|---|---|---|
| Second Re-actor | P total (Bar) | - | 4.0 | 3.0 | - | 4.0 | 4.0 | 4.0 | 4.0 | 4.0 | 4.0 | 1.2 | 4.0 | 4.0 | 4.0 | 4.0 | 1.4 |
| | C2 feed (kgC2 / tonC2 total) | - | 3000 | 255.7 | - | 3500 | 3000 | 86.6 | 483.2 | 483.2 | 1422 | 3000 | 3450 | 229.0 | 5157 | 3156 | 3000 |
| | Temp (C) | - | 68 | 80 | - | 72 | 83 | 68 | 70 | 70 | 72 | 61 | 70 | 70 | 68 | 70 | 62 |
| | Comonomer type | - | - | Butene | - | - | - | - | - | - | - | - | - | - | - | - | - |
| | Comonomer feed (kgC4 /tonC2 Rx2) | - | - | 2.1 | - | - | - | - | - | - | - | - | - | - | - | - | - |
| | Individual IV (dl/g) | - | 19.4 | 10.8 | - | 19.0 | 6.8 | 18.3 | 12.2 | 15.6 | 15.7 | 20.1 | 19.7 | 16.6 | 14.4 | 200 | 12.0 |
| | Individual Mv x $10^6$ g/mol) | - | 4.45 | 1.86 | - | 4.32 | 0.93 | 4.08 | 2.23 | 3.22 | 3.25 | 4.70 | 4.56 | 3.53 | 2.86 | 4.66 | 2.18 |
| | IV (dl/g) | - | 15.5 | 4.4 | - | 100 | 5.2 | 15.3 | 7.5 | 9.5 | 12.2 | 13.8 | 13.0 | 12.0 | 8.7 | 9.8 | 9.2 |
| | Mv x $10^6$ (g/mol) | - | 3.19 | 0.49 | - | 1.66 | 0.63 | 3.13 | 1.08 | 1.53 | 2.23 | 2.68 | 2.46 | 2.18 | 1.35 | 1.61 | 1.47 |

EP 4 201 968 B1

12

(continued)

| Example name | | CE1 | CE2 | CE3 | CE4 | CE5 | CE6 | CE7 | E1 | E2 | E3 | E4 | E5 | E6 | E7 | E8 | E9 |
|---|---|---|---|---|---|---|---|---|---|---|---|---|---|---|---|---|---|
| Third Reactor | P total (Bar) | - | 6.0 | 3.2 | - | 4.0 | 3.2 | 6.0 | 6.0 | 6.0 | 6.0 | 1.7 | 6.0 | 6.0 | 6.0 | 6.0 | 1.9 |
| | C2 feed (kgC2 / tonC2 total) | - | 580.0 | 265.9 | - | 200.0 | 580.0 | 856.3 | 275.6 | 275.6 | 766.3 | 553.8 | 443.4 | 605.8 | 242.1 | 342.2 | 580.0 |
| | Temp (C) | - | 70 | 80 | - | 74 | 78 | 70 | 70 | 70 | 58 | 61 | 70 | 70 | 70 | 68 | 62 |
| | Comonomer type | - | - | Butene | - | - | - | - | - | Hexene | Butene | - | Butene | - | - | - | - |
| | Comonomer feed (kgC4 /tonC2 Rx3) | - | - | 1.0 | - | - | - | - | - | 7.0 | 55.0 | - | 16.0 | - | - | - | - |
| | H2 feed (kgH2 /tonC2 Rx3) | - | - | 0.1 | - | - | - | - | - | - | - | - | - | - | - | - | - |
| | Individual IV (dl/g) | - | 31.5 | 10.5 | - | 25.0 | 10.4 | 26.8 | 18.8 | 22.6 | 17.6 | 18.5 | 24.8 | 25.3 | 18.5 | 19.6 | 16.5 |
| | Individual Mv x $10^6$ (g/mol) | - | 9.17 | 1.78 | - | 6.50 | 1.76 | 7.21 | 4.25 | 5.59 | 3.85 | 4.15 | 6.42 | 6.62 | 4.15 | 4.52 | 350 |
| | IV (dl/g) | 25.3 | 24.8 | 6.7 | 20.9 | 13.0 | 8.2 | 23.9 | 11.1 | 13.7 | 15.8 | 16.4 | 18.2 | 19.3 | 11.6 | 12.3 | 13.5 |
| | Mv x $10^6$ (g/mol) | 6.62 | 6.42 | 0.91 | 4.98 | 2.45 | 1.23 | 6.08 | 1.94 | 2.65 | 3.28 | 3.47 | 4.05 | 4.42 | 2.07 | 2.26 | 260 |
| Note: UNI is unimodal reactor, MULTI is multimodal reactor and BLEND is blend system. | | | | | | | | | | | | | | | | | |

Table 2 Polymer properties

| Properties | Example | CE1 | CE2 | CE3 | CE4 | CE5 | CE6 | CE7 | E1 | E2 | E3 | E4 | E5 | E6 | E7 | E8 | E9 |
|---|---|---|---|---|---|---|---|---|---|---|---|---|---|---|---|---|---|
| | Unit | UNI | MULTI | MULTI | BLEND | MULTI | MULTI | MULTI | MULTI | MULTI | MULTI | MULTI | MULTI | MULTI | MULTI | MULTI | MULTI |
| Intrinsic Viscosity of Final Product | dl/g | 25.3 | 24.8 | 6.7 | 20.9 | 13.0 | 8.2 | 23.9 | 11.1 | 13.7 | 15.8 | 16.4 | 18.2 | 19.3 | 11.6 | 12.3 | 13.5 |
| Mv of Final Product | x $10^6$ g/mol | 6.62 | 6.42 | 0.91 | 4.98 | 2.45 | 1.23 | 6.08 | 1.94 | 2.65 | 3.28 | 3.47 | 4.05 | 4.42 | 4.42 | 2.26 | 2.60 |
| Mw | x $10^6$ g/mol | 3.02 | 2.50 | 0.38 | 2.65 | 1.27 | 0.58 | 2.89 | 1.34 | 1.53 | 206 | 206 | 2.29 | 2.25 | 1.45 | 2.21 | 1.44 |
| Mn | x $10^6$ g/mol | 0.44 | 0.20 | 0.03 | 0.17 | 0.03 | 0.04 | 0.15 | 0.03 | 0.02 | 0.12 | 0.05 | 0.04 | 0.12 | 0.03 | 0.13 | 0.03 |
| Mw/Mn | | 7 | 13 | 28 | 16 | 42 | 16 | 20 | 60 | 70 | 29 | 45 | 63 | 19 | 55 | 17 | 48 |
| Comonomer | | - | - | butene | - | - | - | - | - | hexene | butene | - | butene | - | - | - | - |
| % Comonomer | % mol | - | - | 0.20 | - | - | - | - | - | 0.03 | 0.17 | - | 0.03 | - | - | - | - |
| Density | g/cm³ | 0.9350 | 0.9357 | 0.9590 | 0.9358 | 0.9471 | 0.9580 | 0.9432 | 0.9479 | 0.9500 | 0.9322 | 0.9433 | 0.9417 | 0.9361 | 0.9519 | 0.9340 | 0.9430 |
| Double notched Charpy impact 23 | kJ/m² | 68.0 | 149.0 | 14.0 | 152.9 | 166.0 | 128.0 | 91.0 | 190.5 | 199.2 | 218.3 | 239.0 | 228.2 | 264.0 | 188.0 | 225.0 | 278.0 |
| Eta (0.1) | kPa.s | 8,781 | 7,000 | 265 | 4,216 | 2,024 | 450 | 8,072 | 2,601 | 3,771 | 5,728 | 5,484 | 5,189 | 5,772 | 3,198 | 3,510 | 4,550 |

Note: UNI is unimodal reactor, MULTI is multimodal reactor and BLEND is blend system.

## Discussion

The inventive samples E1 to E9 were produced by multimodal polymerization process in small to large scale reactors with various IV ranges from 11.1 to 19.3 dl/g which provide significantly improvement on double-notched charpy impact strength above 185 kJ/m$^2$ to all comparative examples: CE1 to CE7.

Both properties were enhanced by the balancing of low to medium molecular weight portion and ultrahigh molecular weight portion in the multimodal polyethylene compositions. The main reasons that multimodal samples show better impact resistance are the low molecular weight portion which can promote chain diffusion across the boundary between adjacent UHMWPE particles and reduce void formation between adjacent particles. It means that the low molecular weight plays an important role in the elimination of the gain boundary and enhance sintering degree. The inventive example 9 shows the highest impact strength, 278 kJ/m$^2$. In case of comonomer incorporation in multimodal UHMWPE, the 1-butene and 1-hexene comonomer were added into polymerization process. The results show that even comonomer content; 0.03-0.17 %mol the UHMWPE examples still maintain good impact resistance. Even CE2, CE5, CE6 and CE7 produced by multimodal process containing low molecular weight portion cannot achieve high impact resistance above 190 kJ/m2

Not only impact property but also extrudability of multimodal samples is drastically improved. The low molecular weight in polymer composition acts as lubricating agent that promote followability of UHMWPE molecules in molten state.

The important rheological parameter, Eta (0.1) values, were also observed for all examples. Eta (0.1) is directly related to processability of UHMWPE in single screw extruder and flowability in die. Examples with Eta (0.1) below 5,772 kPa.s show the good followability in sheet extrusion process. However, CE1 with Eta (0.1), 8,781 kPa.s which is unimodal example cannot be extruded with the same processing condition due to lacks of low molecular weight portion in composition to enhance flowability in molten state. CE2 was produced from multimodal reactor but it cannot be extruded with the same condition due to too high Eta (0.1), 7,000 kPa.s. CE3 is the lowest molecular weight sample, IV = 6.7 dl/g which shows the lowest Eta(0.1), 265 kPa.s that is the best flowability compared to others. CE4 is the blend system with IV = 20.9 dl/g which has Eta(0.1), 4,216 kPa.s. that can be extruded with the same condition but the mechanical properties, especially, double notched Charpy impact is not achieved to high level due to bad homogeneity or fusion effect in polymer blend.

It can be clearly seen that inventive examples comprising of low to ultra high molecular weight polyethylene can promote processability and impact strength. All the results indicated the distinguish features and advantages of new inventive examples over the prior art.

The features disclosed in the foregoing description and in the dependent claims may, both separately and in any combination thereof, be material for realizing the aspects of the disclosure made in the independent claims, in diverse forms thereof.

## Claims

1. A multimodal polyethylene composition comprising

    (A) 7 to 40 % by weight, with respect to the total weight of the multimodal polyethylene composition, of a low molecular weight polyethylene homopolymer having a viscometer molecular weight (Mv), of 31,000 to 260,000 g/mol;
    (B) 20 to 45 % by weight, with respect to the total weight of the multimodal polyethylene composition, of a first high molecular weight polyethylene homopolymer or copolymer having a viscometer molecular weight, of from 1,900,000 to 5,200,000 g/mol; and
    (C) 28 to 72 % by weight, with respect to the total weight of the multimodal polyethylene composition, of a second high molecular weight polyethylene homopolymer or copolymer having a viscometer molecular weight from 3,000,000 to 7,300,000 g/mol; wherein the first high molecular weight polyethylene and the second high molecular weight polyethylene differ from each other with respect to the viscometer molecular weight thereof; and

    an intrinsic viscosity (IV) of the multimodal polyethylene composition is from 11 to 19.5 dl/g, wherein the intrinsic viscosity is measured as set forth in the description.

2. The multimodal polyethylene composition according to claim 1, wherein the multimodal polyethylene composition has a double notched Charpy impact strength of 170 to 300 kJ/m$^2$, measured by ISO11542-2.

3. The multimodal polyethylene composition according to claim 1 or 2, wherein the multimodal polyethylene composition has a double notched Charpy impact strength from 185 to 278 kJ/m$^2$, measured by ISO 11542-2.

4. The multimodal polyethylene composition according to any of the claims 1 to 3, wherein the multimodal polyethylene composition has a complex viscosity at high shear rate (0.1 1/s, at 190°C) from 2,550 to 5,800 kPa.s.

5. The multimodal polyethylene composition according to any of the claims 1 to 4, wherein the multimodal polyethylene composition has a density from 0.930 to 0.960 g/cm$^3$ according to ASTM D 1505.

6. A sheet comprising the multimodal polyethylene composition according to any of the claims 1 to 5.

7. A hollow article comprising the multimodal polyethylene composition according to any of the claims 1 to 5.

8. A method for preparing the sheet according to claim 6 or the hollow article according to claim 7, comprising a step of compression molding the multimodal polyethylene composition according to any of the claims 1 to 4.

9. The method for preparing the sheet according to claim 6 or the hollow article according to claim 7, comprising a step of extruding the multimodal polyethylene composition according to any of the claims 1 to 5.

10. Use of the sheet according to claim 6 or of the hollow article according to claims 7 as a liner, a profile, a pipe, a tape, fiber, an industrial part, a high impact part, a high abrasive part, a sliding material or a RAM extrusion profile.

**Patentansprüche**

1. Multimodale Polyethylenzusammensetzung, umfassend

(A) 7 bis 4.0 Gew.-%, bezogen auf das Gesamtgewicht der multimodalen Polyethylenzusammensetzung, eines Polyethylenhomopolymers mit niedrigem Molekulargewicht mit einem Viskosimeter-Molekulargewicht (Mv) von 31.000 bis 260.000 g/mol;
(B) 20 bis 45 Gew.-%, bezogen auf das Gesamtgewicht der multimodalen Polyethylenzusammensetzung, eines ersten Polyethylenhomopolymers oder -copolymers mit hohem Molekulargewicht mit einem Viskosimeter-Molekulargewicht von 1.900.000 bis 5.200.000 g/mol; und
(C) 28 bis 72 Gew.-%, bezogen auf das Gesamtgewicht der multimodalen Polyethylenzusammensetzung, eines zweiten Polyethylenhomopolymers oder - copolymers mit hohem Molekulargewicht mit einem Viskosimeter-Molekulargewicht von 3.000.000 bis 7.300.000 g/mol; wobei sich das erste Polyethylen mit hohem Molekulargewicht und das zweite Polyethylen mit hohem Molekulargewicht in Bezug auf das Viskosimeter-Molekulargewicht davon voneinander unterscheiden; und

eine intrinsische Viskosität (IV) der multimodalen Polyethylenzusammensetzung 11 bis 19,5 dl/g beträgt, wobei die intrinsische Viskosität wie in der Beschreibung dargelegt gemessen wird.

2. Multimodale Polyethylenzusammensetzung nach Anspruch 1, wobei die multimodale Polyethylenzusammensetzung eine Charpy-Kerbschlagzähigkeit von 170 bis 300 kJ/m$^2$ , gemessen nach ISO11542-2, aufweist.

3. Multimodale Polyethylenzusammensetzung nach Anspruch 1 oder 2, wobei die multimodale Polyethylenzusammensetzung eine Charpy-Kerbschlagzähigkeit von 185 bis 278 kJ/m$^2$ , gemessen nach ISO11542-2, aufweist.

4. Multimodale Polyethylenzusammensetzung nach einem der Ansprüche 1 bis 3, wobei die multimodale Polyethylenzusammensetzung eine komplexe Viskosität bei hoher Scherrate (0,11/s, bei 190 °C) von 2.550 bis 5.800 kPa.s aufweist.

5. Multimodale Polyethylenzusammensetzung nach einem der Ansprüche 1 bis 4, wobei die multimodale Polyethylenzusammensetzung eine Dichte von 0,930 bis 0,960 g/cm$^3$ gemäß ASTM D 1505 aufweist.

6. Folie, umfassend die multimodale Polyethylenzusammensetzung nach einem der Ansprüche 1 bis 5.

7. Hohlartikel, umfassend die multimodale Polyethylenzusammensetzung nach einem der Ansprüche 1 bis 5.

8. Verfahren zur Herstellung der Folie nach Anspruch 6 oder des Hohlartikels nach Anspruch 7, umfassend einen Schritt des Formpressens der multimodalen Polyethylenzusammensetzung nach einem der Ansprüche 1 bis 4.

**9.** Verfahren zur Herstellung der Folie nach Anspruch 6 oder des Hohlartikels nach Anspruch 7, umfassend einen Schritt des Extrudierens der multimodalen Polyethylenzusammensetzung nach einem der Ansprüche 1 bis 5.

**10.** Verwendung der Folie nach Anspruch 6 oder des Hohlartikels nach Anspruch 7 als Auskleidung, Profil, Rohr, Band, Faser, Industrieteil, hochschlagfestes Teil, hochabrasives Teil, Gleitmaterial oder RAM-Extrusionsprofil.

**Revendications**

**1.** Composition de polyéthylène multi-mode comprenant :

(A) de 7 à 40% en poids, relativement au poids total de la composition de polyéthylène multi-mode, d'un homopolymère de polyéthylène à faible poids moléculaire dont le poids moléculaire au viscosimètre (Mv) est compris entre 31 000 et 260 000 g/mol ;
(B) de 20 à 45% en poids, relativement au poids total de la composition de polyéthylène multi-mode, d'un premier homopolymère ou copolymère de polyéthylène au poids moléculaire élevé, dont le poids moléculaire au viscosimètre est compris entre 1 900 000 et 5 200 000 g/mol ; et
(C) de 28 à 72% en poids, relativement au poids total de la composition de polyéthylène multi-mode, d'un deuxième homopolymère ou copolymère de polyéthylène au poids moléculaire élevé, dont le poids moléculaire au viscosimètre est compris entre 3 000 000 et 7 300 000 g/mol ; le premier polyéthylène au poids moléculaire élevé et le deuxième polyéthylène au poids moléculaire élevé se distinguant l'un de l'autre relativement à leur poids moléculaire au viscosimètre ; et

une viscosité intrinsèque (IV) de la composition de polyéthylène multi-mode étant comprise entre 11 et 19,5 dl/g, la viscosité intrinsèque étant mesurée de la façon énoncée dans la description.

**2.** Composition de polyéthylène multi-mode selon la revendication 1, la composition de polyéthylène multi-mode présentant une résistance aux chocs Charpy sur barreau doublement entaillé comprise entre 170 et 300 KJ/m$^2$, mesurée conformément à l'ISO11542.2.

**3.** Composition de polyéthylène multi-mode selon la revendication 1 ou 2, la composition de polyéthylène multi-mode présentant une résistance aux chocs Charpy sur barreau doublement entaillé comprise entre 185 et 278 KJ/m$^2$, mesurée conformément à l'ISO11542.2.

**4.** Composition de polyéthylène multi-mode selon une quelconque des revendications 1 à 3, la composition de polyéthylène multi-mode présentant une viscosité complexe à un taux de cisaillement élevé (0,1 1/s à 190°C) allant de 2 550 à 5 800 kPa.s.

**5.** Composition de polyéthylène multi-mode selon une quelconque des revendications 1 à 4, la composition de polyéthylène multi-mode présentant une densité allant de 0,930 à 0,960 g/cm$^3$ conformément à l'ASTM D 1505.

**6.** Feuille comprenant la composition de polyéthylène multi-mode selon une quelconque des revendications 1 à 5.

**7.** Article creux comprenant la composition de polyéthylène multi-mode selon une quelconque des revendications 1 à 5.

**8.** Procédé pour la préparation de la feuille selon la revendication 6 ou de l'article creux selon la revendication 7, comprenant une étape de moulage par compression de la composition de polyéthylène multi-mode selon une quelconque des revendications 1 à 4.

**9.** Procédé pour la préparation de la feuille selon la revendication 6 ou de l'article creux selon la revendication 7, comprenant une étape d'extrusion de la composition de polyéthylène multi-mode selon une quelconque des revendications 1 à 5.

**10.** Utilisation de la feuille selon la revendication 6 ou de l'article creux selon la revendication 7 comme une garniture, un profilé, un tuyau, un ruban, une fibre, une pièce industrielle, une pièce à impact élevé, une pièce fortement abrasive, un matériau coulissant, ou un profilé d'extrusion RAM.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1655334 A1
- WO 2013144328 A
- WO 2014091501 A1
- WO 2015121161 A1
- EP 2907843 A1
- EP 2743305 A1
- US 20090163679 A1
- US 2020095404 A1
- US 2019256695 A1
- HU 0800771

**Non-patent literature cited in the description**

- Young's modulus, and impact strength. *J polym Res*, 2014, vol. 21, 482
- **CHEN**. *polymer science series A*, 2014, vol. 56 (5)
- **B. HAGSTROM**. Conference on Polymer Processing. The Polymer Processing Society, vol. 4, 13
- Extended Abstracts and Final Programme. **B. HAGSTROM**. Conference on Polymer Processing. The Polymer Processing Society, 19 August 1997, vol. 4, 13